# EUROPEAN PATENT APPLICATION

(11) **EP 2 320 256 A1**
(43) Date of publication of application: **11.05.2011**
(21) Application number: 10251745.5
(22) Date of filing: 06.10.2010
(51) Int. Cl.: G02B 6/02, C03B 37/012, C03B 37/028

(54) **Optical fiber manufacturing method**

(30) Priority: 27.10.2009 JP 2009246746
(71) Applicant: Furukawa Electric Co., Ltd., Chiyoda-ku Tokyo 100-8322 (JP)
(72) Inventor: Mukasa, Kazunori, Tokyo 100-8322 (JP)
(74) Representative: Jackson, Martin Peter

(57) **Abstract**

An optical fiber manufacturing method comprises preparing first base materials (3, 9, 10) each of which includes at least one core forming part to form a core (1a, 7a) and a cladding forming part to form a cladding (1b, 7b); performing a first elongating to form second base materials (5, 12) by forming a first bundle (4, 11) by bundling two or more base materials including at least one of the first base materials having been prepared at the preparing and by thermally elongating the first bundle; and performing a second elongating at least once to form a second bundle (6) by bundling two or more base materials including at least one of the second base materials and by thermally elongating the second bundle, wherein the second bundle is thermally elongated up until the point when the optical fiber (1, 7) is formed at the second elongating.

## Description

This application is based upon and claims the benefit of priority from the prior Japanese Patent Application No. 2009-246746, filed on October 27, 2009; the entire contents of which are incorporated herein by reference.

### BACKGROUND OF THE INVENTION

### 1. Field of the Invention

The present invention relates to an optical fiber manufacturing method.

### 2. Description of the Related Art

A multi-core optical fiber (MCF) is a novel optical fiber including plural cores in one optical fiber, and it is capable of having many cores provided in a small space. The multi-core optical fiber is expected to achieve a large-capacity image transmission and a new optical propagation such as a spatial multiplexing transmission. Particularly, a type of a multi-core optical fiber suppressing an optical interference between cores can achieve two times the original transmission capacity when the core number doubles, and three times the original transmission capacity when the core number triples, for example. Therefore, this can become a key technique for a large-capacity transmission in the future. Accordingly, techniques of multi-core optical fibers used as optical transmission paths have been widely studied.

There is a type of multi-core optical fiber that confines light into cores by adding germanium (Ge) to cores and by increasing a refractive index of cores to be higher than that of a cladding (hereinafter, where appropriate, "solid multi-core optical fiber"), like normal optical fibers. For example, a document by M. Koshiba et al. (IEICE Electron Express 2009, Vol. 6, No. 2, pp 98-103) discloses a solid multi-core optical fiber having cores, of which refractive index is slightly different from that of a clad, arranged in a cladding with an external diameter of 125 micrometers. Meanwhile, there is a type of multi-core optical fiber that is called "holey fiber (HF)". The holey fiber is an optical fiber that propagates light by confining the light using a principle of a total reflection by decreasing an average refractive index of a clad, by regularly arranging holes in the cladding and forming a hole structure. The holey fiber can achieve a special characteristic such as an abnormal dispersion in an endlessly single mode (ESM) or in a short wavelength which a conventional optical fiber cannot achieve, by using holes to control a refractive index. For example, a document by K. Imamura et al. (OFC2009-OTuC3) discloses an HF multi-core optical fiber capable of achieving an optical transmission over 100 kilometers in a wavelength region of 500 nanometers to 1,620 nanometers.

As manufacturing methods of a multi-core optical fiber, there are a stack and draw method and a drilling method used as conventional manufacturing methods of holey fibers. The stack and draw method arranges a hollow glass capillary tube to form a cladding having holes around a solid glass rod to form cores in a case of an HF-type, and arranges a glass rod to form a cladding having a lower refractive index than that of cores around a solid glass rod to form cores in a case of a solid type. The hollow glass capillary tube or the glass rod is inserted into a jacket tube, and the jacket tube is thermally elongated to form an optical fiber preform. According to the drilling method, holes are formed with a drill in a rod-shaped base material made of glass, and the holes are arranged in a cladding in the case of the HF-type, and a glass rod to form cores is inserted into the holes in the case of the solid type, thereby forming an optical fiber preform, respectively.

However, according to the stack and draw method, the drilling method or the like, there is a problem in that manufacturing of a multi-core optical fiber becomes increasingly difficult when a cross-sectional structure of the cores becomes minute and complex along with an increase in the number of cores. When a holey fiber having one core is manufactured, it becomes increasingly difficult to manufacture an optical fiber as a cross-sectional structure of the core becomes minute and complex along with the increase in the number of holes.

The present invention has been achieved in view of the above problems, and an object of the present invention is to provide an optical fiber manufacturing method capable of more easily manufacturing an optical fiber having a minute and complex cross-sectional structure.

### SUMMARY OF THE INVENTION

It is an object of the present invention to at least partially solve the problems in the conventional technology.

In accordance with one aspect of the present invention, an optical fiber manufacturing method comprises preparing first base materials (3, 9, 10) each of which includes at least one core forming part to form a core (1a, 7a) and a cladding forming part to form a cladding (1b, 7b); performing a first elongating to form second base materials (5, 12) by forming a first bundle (4, 11) by bundling two or more base materials including at least one of the first base materials having been prepared at the preparing and by thermally elongating the first bundle; and performing a second elongating at least once to form a second bundle (6) by bundling two or more base materials including at least one of the second base materials and by thermally elongating the second bundle, wherein the second bundle is thermally elongated up until the point when the optical fiber (1, 7) is formed at the second elongating.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic cross-sectional view of a multi-core optical fiber to be manufactured by a manufacturing method according to a first embodiment of the present invention;
FIG. 2 is a diagram depicting a preparing process in the first embodiment;
FIG. 3 is a diagram depicting a first elongating process in the first embodiment;
FIG. 4 is a diagram depicting a second elongating process in the first embodiment;
FIG. 5 is a schematic cross-sectional view of a multi-core optical fiber to be manufactured by a manufacturing method according to a second embodiment of the present invention;
FIG. 6 is a diagram depicting a preparing process in the second embodiment;
FIG. 7 is a diagram depicting a removing process in the second embodiment;
FIG. 8 is a diagram depicting a first elongating process in the second embodiment; and
FIG. 9 is a diagram showing another example of the elongating process in the second embodiment.

### DETAILED DESCRIPTION OF THE PREFERRED EMBODIMENTS

Exemplary embodiments of an optical fiber manufacturing method according to the present invention will be explained below in detail with reference to the accompanying drawings. The present invention is not limited to the embodiments. In addition, the same reference numerals are denoted to like or corresponding constituent elements in the drawings.

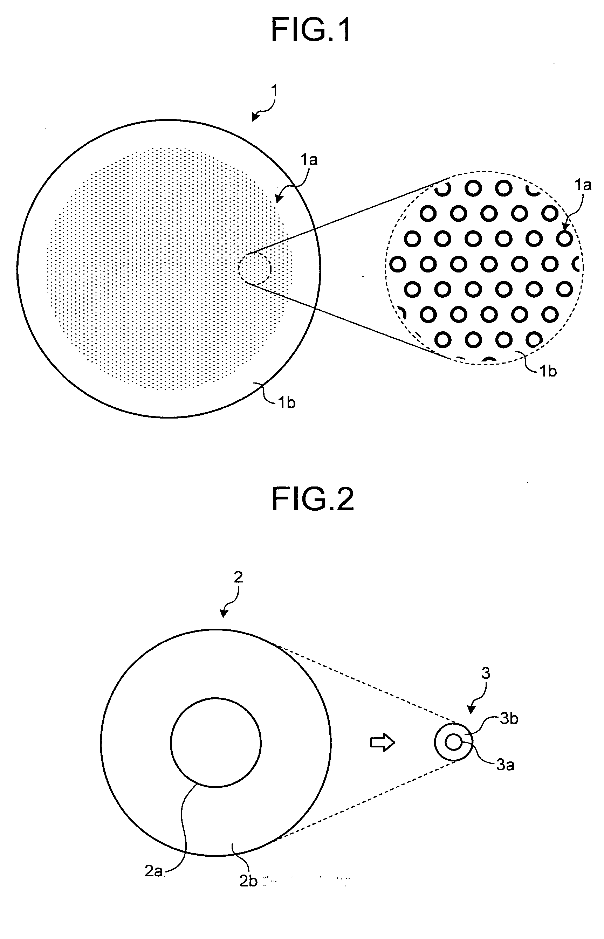

A manufacturing method of a multi-core optical fiber according to a first embodiment of the present invention will be explained first. FIG. 1 is a schematic cross-sectional view of a multi-core optical fiber to be manufactured by the manufacturing method according to the first embodiment. FIG. 1 is also a partially enlarged view of the cross section. As shown in FIG. 1, a multi-core optical fiber 1 includes 10,000 cores 1a and a cladding 1b formed on an external periphery of the cores 1a. The multi-core optical fiber 1 is a solid type, and a refractive index of each of the cores 1a is higher than that of the cladding 1b. Each of the cores 1a is made of silica glass with Ge being added, for example, and the cladding 1b is made of pure silica glass not containing a dopant for adjusting a refractive index, or is made of silica glass with fluoride (F) being added. The diameter of the core 1a is about 10 micrometers, and a specific refractive-index difference between the core 1a and the cladding 1b is about 0.35%. When mutual specific refractive indexes of the cores 1a are to be slightly differentiated (that is, when different kinds of cores 1a are being used) in the multi-core optical fiber 1 as described in the document by M. Koshiba et al., a distance between centers of the cores 1a is set at about 50 micrometers (at least 40 micrometers), for example. An interference of light propagating in each of the cores 1a is then suppressed, and a crosstalk can be reduced to equal to or less than -30 decibels. On the other hand, when the same kind of cores 1 a having mutually the same specific refractive-indexes are used, a difference between centers of the cores 1a is at least 70 micrometers (80 micrometers, for example, considering a variation in distances between centers in a longitudinal direction). An interference of light propagating in each of the cores 1a is then suppressed, and a crosstalk can be reduced to equal to or less than -30 decibels.

The multi-core optical fiber 1 includes 10,000 cores 1a, and has a possibility of achieving a remarkably large-capacity optical transmission that has never been able to be achieved. The manufacturing method according to the first embodiment as will be explained below can provide the multi-core optical fiber 1 more easily than the conventional method, and includes a preparing process, a first elongating process and a second elongating process. The manufacturing method will be explained below with respect to a case of using different kinds of cores 1a and setting a distance between centers of the cores 1a to 50 micrometers at least, and a case of using the same kind of cores 1a and setting a distance between centers of the cores 1a to 80 micrometers at least.

The preparing process will be explained first. FIG. 2 illustrates the preparing process. First, an optical fiber preform 2 is formed in an identical manner to that of manufacturing a normal solid optical fiber, by using a known method such as a vapor-phase axial deposition (VAD) method or a modified chemical vapor deposition (MCVD) method. The optical fiber preform 2 has a rod shape, and includes a core forming part 2a and a cladding forming part 2b formed on an external periphery of the core forming part 2a, as shown in a cross-sectional view in FIG. 2. The core forming part 2a is a part where the core 1a is formed, and is made of the same material as that of the core 1a. On the other hand, the cladding forming part 2b is a part where the cladding 1b is formed, and is made of the same material as that of the cladding 1b. The ratio of the diameter between the core forming part 2a and the cladding forming part 2b is set at 1:5 or 1:8. When the core forming part 2a is finally set such that the core 1 a has a diameter of about 10 micrometers by thermal extension, a distance between centers of adjacent cores 1a becomes about 50 micrometers or 80 micrometers. In this way, a distance between centers of adjacent cores 1a can be adjusted by the ratio of the diameter between the core forming part 2a and the cladding forming part 2b. In manufacturing the multi-core optical fiber 1 using different kinds of cores 1a, plural different kinds (for example, three kinds) of optical fiber preforms 2 having the core forming parts 2a of mutually different refractive indexes are formed.

The same kind or different kinds of optical fiber preforms 2 are then thermally elongated to form a first base material 3. This thermal extension can be performed by using a drawing device or a glass extension device used to manufacture an optical fiber. In this case, the first base material 3 has a diameter of about 1.0 millimeter to facilitate bundling of the first base materials 3 in a subsequent process. The first base material 3 includes a core forming part 3a and a cladding forming part 3b as shown in a cross-sectional view in FIG. 2. The ratio of the diameter between the core forming part 3a and the cladding forming part 3b is substantially the same as the ratio of the diameter between the core forming part 2a and the cladding forming part 2b in the optical fiber preform 2. This first base material 3 is cut into pieces each having a length of 500 millimeters for example, at which the pieces can be easily bundled, whereby the same kind or different kinds of many first base materials 3 are prepared.

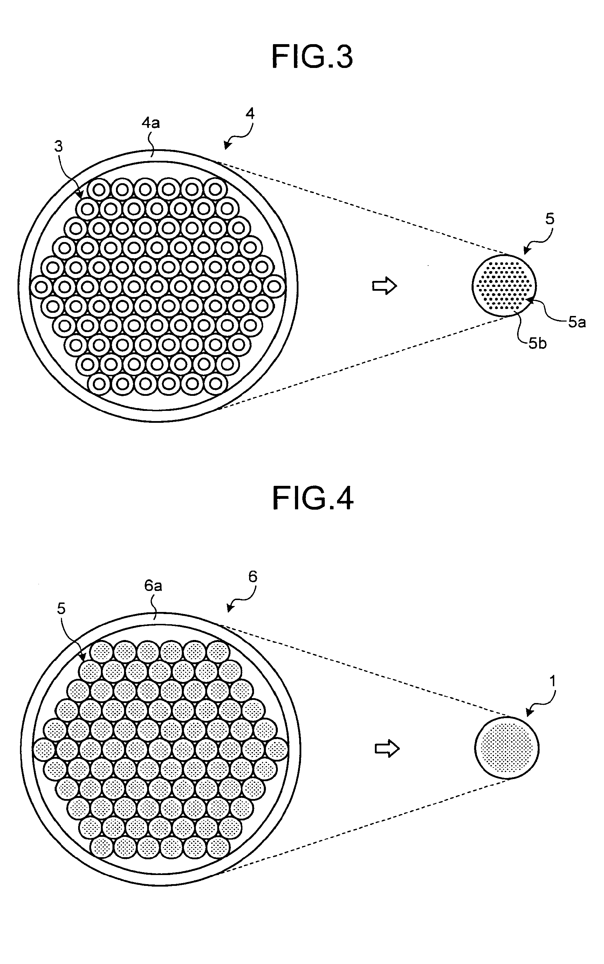

The first elongating process will be explained next. FIG. 3 illustrates the first elongating process. First, as shown in FIG. 3, a bundle of 100 first base materials 3 as prepared in the preparing process is inserted into a jacket tube 4a, thereby forming a first bundle 4 of the base materials. When the multi-core optical fiber 1 using the same kind of cores 1a is manufactured, the 100 first base materials 3 are all of the same kind. On the other hand, when the multi-core optical fiber 1 using different kinds of cores 1a is manufactured, the 100 first base materials 3 are those having been suitably selected from among different kinds of first base materials 3. The jacket tube 4a is made of the same material as that of the cladding 1b, for example, and the jacket tube 4a has such internal diameter that enables the jacket tube 4a to accommodate the 100 first base materials 3 by insertion. Although FIG. 3 illustrates only 90 first base materials 3 as arranged in a hexagonal close-packed structure (a triangular lattice shape), the remaining ten first base materials 3 are being inserted into gaps between the first base materials 3 and the jacket tube 4a. Rod-shaped filling members made of the same material as that of the cladding 1b, for example, are also inserted suitably into the remaining gaps between the first base materials 3 and the jacket tube 4a, thereby filling the gaps. Next, the first bundle 4 is thermally elongated to form a second base material 5. In this case, the second base material 5 has a diameter of about 1.0 millimeter to facilitate bundling of the second base materials 5 in a subsequent process. This second base material 5 includes 100 core forming parts 5a and a cladding forming part 5b formed on an external periphery thereof, and has a cross-sectional structure identical to that of a normal multi-core optical fiber having 100 cores. This second base material 5 is cut into pieces each having a length of 500 millimeters for example, at which the pieces can be easily bundled, whereby many second base materials 5 are prepared.

The second elongating process will be explained next. The second elongating process is substantially identical to the first elongating process. FIG. 4 illustrates the second elongating process. As shown in FIG. 4, 100 second base materials 5 having been prepared in the first elongating process are suitably selected and are inserted into a jacket tube 6a, thereby forming a second bundle 6 of the base materials. As a result, the second bundle 6 contains 10,000 core forming parts 5a. The jacket tube 6a is also made of the same material as that of the cladding 1b, for example, and has such internal diameter that enables the jacket tube 6a to accommodate 100 second base materials 5 by insertion. Although FIG. 4 illustrates only 90 second base materials 5 as arranged in a triangular lattice shape, the remaining 10 second base materials 5 are being inserted into gaps between the second base materials 5 and the jacket tube 6a. Rod-shaped filling members made of the same material as that of the cladding 1b, for example, are also inserted suitably into the remaining gaps between the second base materials 5 and the jacket tube 6a, thereby filling the gaps.

The second bundle 6 is then thermally elongated up until the point when the core forming part 5a has a diameter of about 10 micrometers. Accordingly, the multi-core optical fiber 1 including 10,000 cores 1a each having a diameter of 10 micrometers and having a distance between centers of the cores 1a at a desired value is formed. In this case, the multi-core optical fiber 1 has a diameter of 6 millimeters.

When a multi-core optical fiber including 10,000 cores is manufactured by using the conventional stack and draw method, 10,000 base materials to form the cores are necessary to be inserted into a jacket tube having a limited internal diameter. Therefore, the diameter of each of the base materials needs to be considerably small. Consequently, the base materials are easily damaged or broken, and become difficult to handle. Considering breaking of the base materials, a thin base material cannot have a large length. Therefore, a bundle of the base materials to be elongated cannot have a large length, and a length of a multi-core optical fiber that can be manufactured at one time cannot be increased. When a large number of base materials are used to form the cores, it becomes difficult to arrange the core materials all at desired positions within the jacket tube and to maintain the arrangement. Consequently, a positional deviation of the cores can occur easily, and it becomes difficult to set a distance between centers of the cores at a desired value.

On the other hand, according to the manufacturing method of the first embodiment of the present invention, a process of thermally elongating a bundle of two or more base materials is performed two times to form the multi-core optical fiber 1. Therefore, the multi-core optical fiber 1 can be manufactured using base materials having a size at which the base materials can be easily handled in each of the processes. Consequently, a multi-core optical fiber including many cores such as 10,000 cores can be easily manufactured. At the same time, the cores 1a can be easily arranged at desired positions, and a length of the multi-core optical fiber 1 that can be manufactured at one time can be increased.

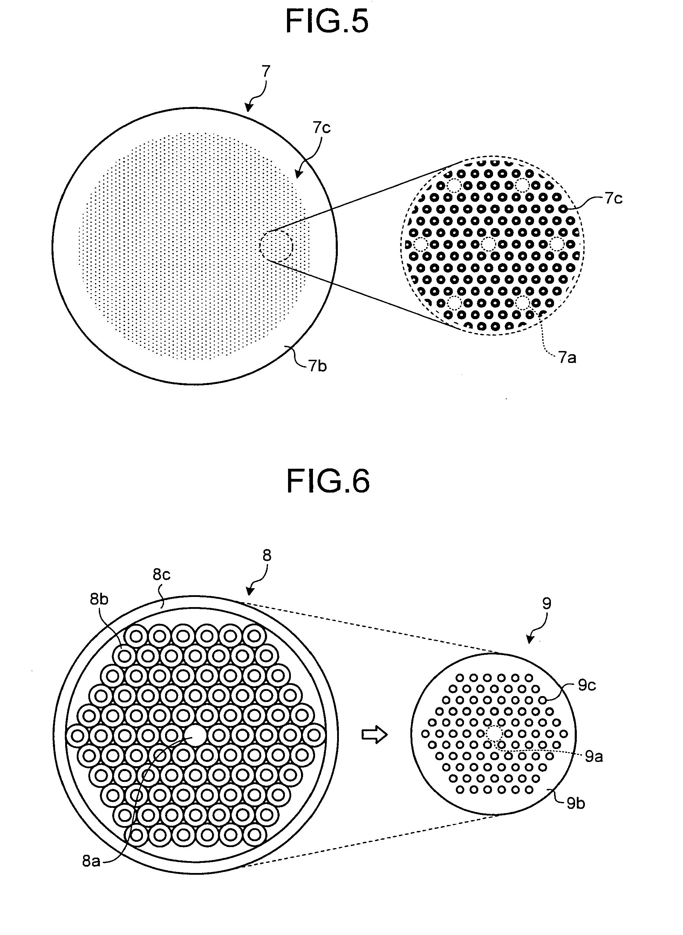

A manufacturing method of a multi-core optical fiber according to a second embodiment of the present invention will be explained next. FIG. 5 is a schematic cross-sectional view of a multi-core optical fiber to be manufactured by the manufacturing method according to the second embodiment. FIG. 5 is also a partially enlarged view of the cross section. As shown in FIG. 5, a multi-core optical fiber 7 is an HF-type including 10,000 cores 7a as arranged in a triangular lattice shape and a cladding 7b formed on an external periphery of the cores 7a, and having a hole structure formed with holes 7c. The multi-core optical fiber 7 has the cores 7a and the cladding 7b made of the same material such as pure silica glass. Confinement of light in each of the cores 7a is achieved by decreasing an average refractive index of the cladding 7b by the holes 7c as arranged in a triangular lattice shape. A hole diameter d of each of the holes 7c is 2.15 micrometers, and a lattice constant A of a triangular lattice formed by the holes 7c is 5 micrometers. Therefore, d/A is 0.43, and an ESM characteristic can be achieved. A distance between centers of the cores 7a is at least about 50 micrometers. Accordingly, as disclosed in the document by K. Imamura et al., interference of light propagating in each of the cores 7a can be suppressed, and a crosstalk of over 1 kilometer can be suppressed to be equal to or less than -60 decibels.

Because the multi-core optical fiber 7 includes 10,000 cores 7a and has the ESM characteristic, the multi-core optical fiber 7 can achieve an optical transmission in a larger transmission capacity than that of the multi-core optical fiber in the first embodiment. The manufacturing method according to the second embodiment as will be explained below can provide the multi-core optical fiber 7 more easily than the conventional methods. The manufacturing method according to the second embodiment includes a preparing process, a removing process, a first elongating process and a second elongating process.

The preparing process in the manufacturing method according to the second embodiment will be explained first. FIG. 6 illustrates the preparing process. In the preparing process, a first base material is prepared by using a normal stack and draw method. As shown in FIG. 6, 90 cladding forming members 8b as hollow capillary tubes to form the cladding 7b having the holes 7c are arranged in a triangular lattice shape and bundled around rod-shaped core forming members 8a to form the cores 7a. This bundle is inserted into a jacket tube 8c to form a preform 8. Diameters of the core forming members 8a and the cladding forming members 8b are set at about 1 millimeter at which these members can be easily bundled, respectively. A rod-shaped filling member made of the same material as that of the cladding 7b, for example, is inserted suitably between the cladding forming members 8b and the jacket tube 8c to fill the gaps. The preform 8 is thermally elongated to form a first base material 9. The diameter of the first base material 9 is set at about 1.0 millimeter to facilitate bundling of the first base materials 9 in a subsequent process. The first base material 9 includes core forming parts 9a and a cladding forming part 9b having a hole structure formed on an external periphery of the core forming part 9a and with 90 holes 9c as arranged in a triangular shape, and has a cross-sectional structure identical to that of an HF. The first base material 9 is cut into pieces each having a length at which the pieces can be easily bundled to prepare many first base materials 9.

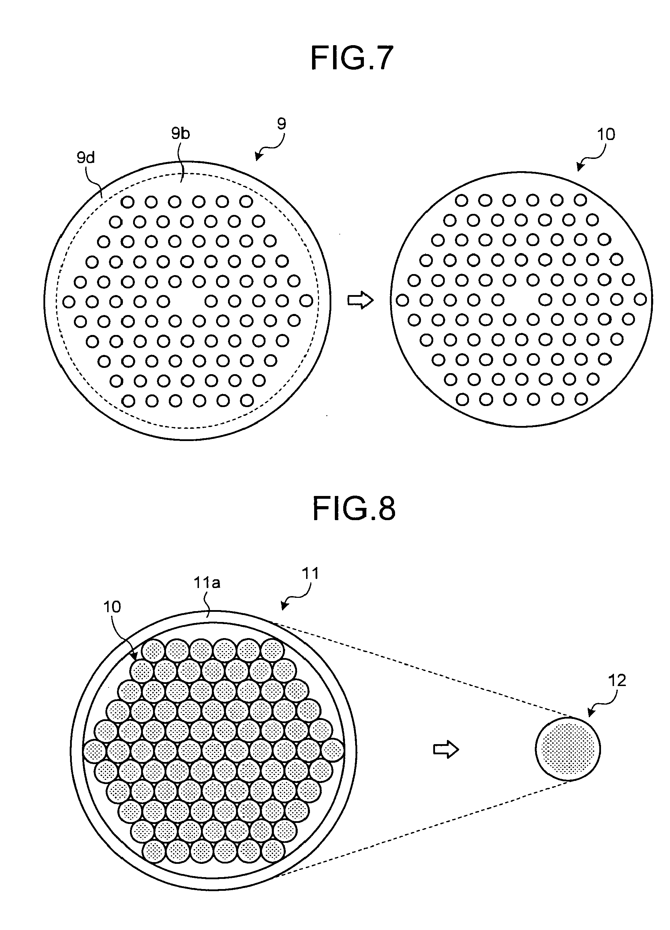

The removing process will be explained next. FIG. 7 illustrates a removing process. In this removing process, a part region 9d at an outer edge of the cladding forming part 9b of the first base material 9 is removed by etching or polishing using an etching liquid such as hydrofluoric acid. Accordingly, the first base material 9 becomes a first base material 10 having a smaller diameter.

The first elongating process will be explained next. FIG. 8 illustrates the first elongating process. As shown in FIG. 8, a bundle of 100 first base materials 10 after the removing process is inserted into a jacket tube 11a to form a first bundle 11. The jacket tube 11a is made of the same material as that of the cladding 7b, for example. A rod-shaped filling member made of the same material as that of the cladding 7b, for example, is inserted suitably between the first base materials 10 and the jacket tube 11a to fill the gaps. Because each of the first base materials 10 has a smaller diameter than that of the first base material 9 after the removing process, the jacket tube 11a having a smaller internal diameter can be used.

The first bundle 11 is then thermally elongated to form a second base material 12. In this case, the second base material 12 has a diameter of about 1.0 millimeter to facilitate bundling of the second base materials 12 in a subsequent process. The second base material 12 has a cross-sectional structure identical to that of an HF multi-core optical fiber having 100 cores. This second base material 12 is cut into pieces each having a length at which the pieces can be easily bundled, whereby many second base materials 12 can be prepared. A bundle of 100 second base materials 12 is inserted into a jacket tube, and the second elongating process identical to the first elongating process is performed, thereby forming the multi-core optical fiber 7 including 10,000 cores 7a.

According to the manufacturing method of the second embodiment, a multi-core optical fiber can be manufactured using base materials having a size at which the base materials can be easily handled in each of the processes, in a similar manner to that of the first embodiment. Therefore, a multi-core optical fiber including many cores such as 10,000 cores can be manufactured more easily, and a length of the multi-core optical fiber 1 that can be manufactured at one time can be increased.

In the second embodiment, although the first base material 9 is prepared by the stack and draw method in the preparing process, the drilling method and a sol-gel method conventionally used to manufacture HFs can also be used.

In the second embodiment, although the removing process is performed only to the first base material 9, the removing process can also be performed to the second base material 12, or can be performed only to the second base material 12. In the first embodiment, the removing process can also be performed to at least one of the first base material 3 and the second base material 5.

When the first base materials 9 are bundled in the first elongating process of the second embodiment, for example, a glass part at an outer edge of the first base materials 9 is surrounded by holes of other first base materials 9. As a result, in a finally-manufactured multi-core optical fiber, this glass part is surrounded by holes and has a function of propagating light like an original core, in some cases. In this case, there is a risk of crosstalk between cores of the multi-core optical fiber aggravating and power of light propagating in the cores being absorbed by the glass part. However, in the first embodiment, because the first base materials 10 having removed the part region 9d at an outer edge of the first base materials 9 are used in the removing process, a cross-sectional area of this glass part becomes small, and this risk is decreased. Preferably, in the removing process, the cross-sectional area of the glass part is decreased to be in an external shape along a hexagonal region arranged with the holes 9c in the first base materials 9.

In the elongating processes of the first and second embodiments, when a jacket tube having a refractive index different from that of a cladding of a multi-core optical fiber finally formed is used, there is a risk that a remaining part of the jacket tube causes a negative influence on an optical transmission characteristic of the multi-core optical fiber. In this case, it is preferable that the removing process is performed after the elongating process and a region at an outer edge corresponding to the jacket tube is removed.

In each of the processes of the first and second embodiments, there is no particular limit to the diameter of each of the base materials as long as the base material can be easily handled without being easily broken. Preferably, the diameter is equal to or greater than 400 micrometers to facilitate the handling.

In the first and second embodiments, although cores and holes of a multi-core optical fiber to be manufactured are arranged in a triangular lattice shape, other arrangements can also be applied for the manufacturing. The number of cores is not limited to 10,000, and the number of the first and second materials to be bundled is not particularly limited. In the first and second embodiments, although the second elongating process is performed one time, the second elongating process can be performed two times and a bundle of the second materials can be thermally elongated up until the point when a multi-core optical fiber is formed in the last second elongating process. With this arrangement, a multi-core optical fiber including a larger number of cores can be easily manufactured.

In the first and second embodiments, although the first base material includes one core forming part, the first base material can include plural core forming parts. In the first and second embodiments, all materials to constitute the first bundle are the first base materials, and all materials to constitute the second bundle are the second base materials. However, the present invention is not limited to such arrangements, and it is sufficient that the first bundle and the second bundle include at least one first base material and one second base material, respectively.

The above arrangement can be explained by a specific example. For instance, one first base material having a core forming part and 90 holes like the first base material in the second embodiment, and 99 first base materials each in a structure having no core forming part and having 91 holes formed at a position of a core forming part are prepared. These first base materials are bundled to form a first bundle, and this first bundle is thermally elongated to form a second base material. This second base material has one core forming part and a cladding forming part having 9,099 (=90+91×99) holes.

Further, 100 second base materials are bundled to form a second bundle, and this second bundle is thermally elongated to manufacture a multi-core optical fiber. As a result, an HF multi-core optical fiber including 100 cores, each core being surrounded by at least 9,099 holes, can be obtained. Further, a second bundle is formed by bundling one second base material and 99 second base materials each in a structure having no core forming part and having 9,100 holes formed at a position of a core forming part. When this second bundle is thermally elongated to form an optical fiber, an HF optical fiber having each core surrounded by 909,999 (=9,099+9,100x99) holes can be obtained. An optical fiber or a multi-core optical fiber having one core having a considerably large number of cores like this example can be manufactured remarkably easily by the present invention, although it is considerably difficult to achieve this by the conventional methods.

When the first bundle is configured by all first base materials, a distance between centers of the core forming parts becomes the same for all core forming parts. However, when any one of the first base materials of the first bundle is replaced with a material having no core forming part, a distance between centers of the core forming parts can be increased. When the first bundle having a part of the first base materials replaced with other base materials is used in this way, a multi-core optical fiber having a different distance between centers of the cores can be easily manufactured.

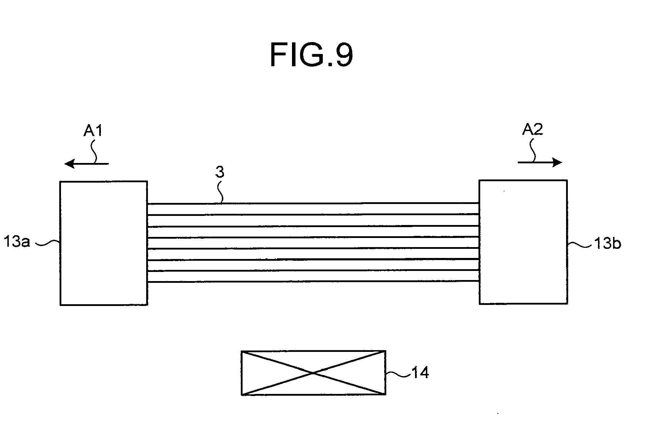

In the first and second embodiments, although the base materials are inserted into the jacket tube and this jacket tube is thermally elongated in each of the elongating processes, the base materials do not need to be inserted into the jacket tube. FIG. 9 is another example of the elongating process. As shown in FIG. 9, instead of the first elongating process in the manufacturing method according to the first embodiment, the first base materials 3 are bundled, and both ends of this bundle are held by holding tools 13a and 13b. The holding tools 13a and 13b are displaced such that the holding tools 13a and 13b are separated to directions of an arrow A1 and an arrow A2, respectively, thereby elongating the bundle of the first base materials 3, while heating a side surface of the bundle of the first base materials 3 by a heater 14.

According to the present invention, an optical fiber having a fine and complex cross-sectional structure can be more easily manufactured because the optical fiber can be manufactured using base materials having a size with better handleability.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An optical fiber manufacturing method comprising:
preparing first base materials (3, 9, 10) each of which includes at least one core forming part to form a core (1a, 7a) and a cladding forming part to form a cladding (1b, 7b);
performing a first elongating to form second base materials (5, 12) by forming a first bundle (4, 11) by bundling two or more base materials including at least one of the first base materials having been prepared at the preparing and by thermally elongating the first bundle; and
performing a second elongating at least once to form a second bundle (6) by bundling two or more base materials including at least one of the second base materials and by thermally elongating the second bundle, wherein
the second bundle is thermally elongated up until the point when the optical fiber (1, 7) is formed at the second elongating.

2. The optical fiber manufacturing method according to claim 1, wherein the second elongating is performed two or more times, and the second bundle is thermally elongated up until the point when the optical fiber is formed at the last second elongating.

3. The optical fiber manufacturing method according to claim 1, wherein the first bundle or the second bundle is inserted into a jacket tube (4a, 6a, 8c, 11 a) and the jacket tube is thermally elongated at the first elongating or the second elongating.

4. The optical fiber manufacturing method according to claim 3, wherein the jacket tube is made of the same material as that of the cladding.

5. The optical fiber manufacturing method according to claim 1, further comprising removing of a part of a region at an outer edge (9d) of the first base material or the second base material.

6. The optical fiber manufacturing method according to claim 1, wherein a diameter of the first base material or the second base material is set to be equal to or greater than 400 micrometers.

7. The optical fiber manufacturing method according to claim 1, wherein the first base material in which a refractive index of the core forming part is higher than a refractive index of the cladding forming part is prepared at the preparing.

8. The optical fiber manufacturing method according to claim 1, wherein the first base material having a hole (7c, 9c) structure in the cladding forming part is prepared at the preparing.
